# EUROPEAN PATENT SPECIFICATION

(11) **EP 2 352 916 B1**
(45) Date of publication and mention of the grant of the patent: **13.03.2013**
(21) Application number: 09760084.5
(22) Date of filing: 05.11.2009
(51) Int. Cl.: F03D 1/00, B29C 44/18

(54) **METHOD FOR A TRANSVERSE FILLING INSIDE AN ELONGATED NARROW CAVITY**
QUERFÜLLUNGSVERFAHREN EINES SCHMALEN VERLÄNGERTEN INNENRAUMES
REMPLISSAGE TRANSVERSAL DANS UNE CAVITÉ ÉTROITE ALLONGÉE

(30) Priority: 06.11.2008 DK 200801525
(43) Date of publication of application: 10.08.2011
(73) Proprietor: LM WP Patent Holding A/S, 6000 Kolding (DK)
(72) Inventor: OKUTAN, Ufuk, DK-7000 Fredericia (DK)
(74) Representative: Hussey, Paul Anthony
(86) International application number: PCT/DK2009/050291
(87) International publication number: WO 2010/051817

(56) References cited:
- EP-A1- 1 428 744
- EP-A2- 1 413 502
- EP-A2- 1 426 273
- EP-A2- 1 538 332
- NL-A- 9 100 816
- US-A- 1 814 677
- US-A- 4 029 128
- US-B1- 6 321 793

## Description

### Field of the Invention

The present invention concerns a method for performing a task in a tight place in an elongated profile, preferably in a wing blade with an outer shell for a wind power plant, where the task preferably is a retrofit task whereby is formed at least one barrier transversely of at least one elongated channel in the profile. The invention further includes a balloon for use by the task.

### Background of the Invention

In connection with wing blades for wind power plants, where the wings typically are made of a fibre composite material, such as glass fibre reinforced plastic or similar, there may sometimes be a need for making various repairs, modernisations or preventive measures, which in the following are all expressed by a common term, namely retrofit.

In connection with a retrofit task internally of a wing blade, often serious problems may arise since performing an even minor retrofit task far into a wing is very difficult due to the restricted space. A wing for a wind power plant is typically constituted by an outer shell forming the aerodynamic shape and one or more internal beams or walls which in principle divide the interior of the wing into longitudinal channels. These longitudinal channels may furthermore be divided transversely.

In order to perform a retrofit task in a wing blade, it may therefore be necessary to cut an opening in the surface of the wing and thus perform the required operation from the outside of wing blade. To make such an opening in the wing is not a big task by itself, but to close the wing blade again is very time-consuming as the individual fibre layers in the laminate of the wing is then to be joined in a very exact and orderly way and with sufficient overlap. This is particularly a condition since the laminate of the wing blade is a structural part which is designed to withstand certain loads. Therefore it is essential that such a repair does not weaken the wing, and therefore it is necessary to reduce stepwise the edge of the opening formed through the wing blade laminate, layer by layer. Since a laminate for a wing may consist of fifty or more fibre layers, this means in principle that fifty or more individual layers are to be exposed along the edge of the opening. Even a relatively small opening in the wing will thus entail a repair extending across a large area of the wing blade surface.

As mentioned above, this is a big task, and obviously it is very relevant to fmd a solution that does not require such an extensive and tedious procedure.

A possible solution is the use of various remote-controlled tools which are passed into the interior of the root end of the wing blade, and which via cameras are controlled and operated to perform the necessary operation, but this equipment is expensive and cumbersome in use.

A typical retrofit task may e.g. be repair of a broken fitting holding a pipe running centrally in the wing blade into position. If such a fitting is broken, oscillations and loads may easily arise in the central pipe, and further damage may easily appear. By the prior art it is possible to perform repair of such a damage in a quite secure way. A remote-controlled tool is introduced in the wing blade from the root end of the wing, and the destroyed fitting is removed. After that, one or more balloons are mounted around the longitudinal central pipe. The balloons are filled with polyurethane foam (PUR foam) of the type that expands and subsequently hardens. In this way, the balloon will form a plug in the cross-section of the wing blade, and the central pipe is fixed hereby.

EP 1 413 502 and US 6,321,793 both disclose a method that essentially corresponds to that mentioned above, where one or more balloons are supplied a foam material which fills the balloon, thereby forming a plug in the structural part in question. Moreover, it is indicated that between two air-filled balloons spaced apart at a certain distance in an elongated channel may fill the space formed between these balloons with e.g. a foam material, hereby attaining increased rigidity or similar in the structure in question.

The first-mentioned method of making an opening in the wing blade surface may obviously also be used for performing such a repair.

Common to the prior art method is, however, that they require dismounting of the wing, and that expensive equipment and/or long time is needed for performing the work required immediately before and after performing the primary task. As mentioned, it is necessary to dismount a wing blade before a retrofit task, and often it is also necessary to transport such wings to a suitable room in order to perform the necessary operations under controlled conditions.

### Object of the Invention

It is the object of the invention to indicate a method for performing different operations inside a wing for a wind power plant, where these operations may be performed without dismounting a wing blade, without making the process time-consuming, and without compromising the structural properties of the wing.

### Description of the Invention

As mentioned in the introduction, the invention concerns a method for performing a retrofit task whereby is formed at least one barrier transversely of at least one elongated channel. This method may advantageously include at least the following steps: establishing a number of inspection and mounting holes in the shell, preferably small, drilled holes with a diameter between 8 and 25 millimetres and preferably with a diameter between 10 and 12 millimetres; providing one or more inflatable balloons in the channel in question, where a balloon is passed through one of the established holes; inflating or filling the balloon or balloons, preferably with atmospheric air; and applying at least one first material layer which extends between the sidewalls of the elongated channel and across the balloon or balloons, where the layer preferably is expanded polyurethane foam.

In the following, the invention will be described in relation to a task which may be performed on an existing wing for a wind power plant, but the invention may also be applied to other kinds of items.

The new feature of a method according to the invention includes, as mentioned, among others that there is established a number of inspection holes and/or mounting holes through the wing blade shell. These holes have such a small size that the holes do not substantially influence the structure of the blade. Moreover, the holes may readily be closed after ending the repair work as they may just be filled with a suitable filler which e.g. can be fibre reinforced. Alternatively, a suitable plug can be glued into the holes. The holes may advantageously be made with a diameter between 8 and 25 mm and in a particularly preferred variant with a diameter between 10 and 12 mm, giving a very modest influence on the structure of the wing blade while simultaneously providing sufficient space for performing the necessary task. The holes are used when introducing elements to the interior of the wing and by inspection of the interior of the wing, for example by means of optical fibre equipment.

Through the holes, one or more balloons can be mounted inside the interior of the wing blade, and they may subsequently be filled with air or other matter. By regulating the pressure in the balloons, a centrally disposed pipe in the wing blade may e.g. be brought into correct position prior to subsequent fixing in this position. Moreover, the said pressure may cause a more or less tight connection between the inner surfaces of the wing blade and the balloon itself.

The necessary balloon or balloons are in place, a hose or the like is introduced through one or more of the mentioned holes, and a material layer is laid over the balloons. This material layer may advantageously be an expanding polyurethane foam material which due to the expanding action closes possible cracks and gaps between the balloon and the inner surface of the wing blade and hardens subsequently. In principle, the balloons are only present to ensure that the applied material is disposed in the correct position, and after hardening of the foam, they may be removed or left according to need. The mentioned foam may be of a type which is quick-setting such that the following process steps may be proceeded with within a few minutes. The foam layer may be the structural element fixing the previously mentioned inner tube, but may also be used only for ensuring the sealing of cracks etc.

In a preferred variant of a method according to the invention, the method further includes a step wherein an additional material layer is laid upon the first material layer, where the additional material has a specific density and/or strength which is greater than that of the material laid at first. This variant is particularly preferred as this second material layer may have strength, elasticity or other properties providing the desired effect. At the same time, it is necessary with a light material for providing a bearing base for applying the second and heavier material. Particularly this function is fulfilled by the expanding foam laid at first. The subsequent material layer may e.g. be a polyurethane rubber mass which is laid in a layer with appropriate thickness. The thickness may be in an interval of a few centimetres to e.g. 60 or 70 centimetres or more. By laying a given amount of material on a well-defined area and by using a defined application procedure, a very exact laying can be achieved, e.g. by a self-levelling material without having to monitor the laying process itself. One may advantageously suffice with e.g. performing inspection after finishing application of material.

As mentioned previously, by the method according to the invention balloon or balloons are mounted through a mounting hole, where the balloon is preferably mounted by means of a long slender tool whereby the balloon e.g. can be extended and passed through the mounting hole. It may be a long rod, possibly with a rounded end, which is passed into the balloon through its neck. By pressing the tool down into the balloon, the balloon is stretched and may be passed more easily through the small mounting hole in the side of the wing blade. In this way, the required hole size may be minimised.

According to a preferred method, the process of providing one or more balloons as well as the process of laying one or more material layers is performed under monitoring with suitable equipment, where the monitoring is effected through mounting and/or inspection holes. Such equipment may e.g. be fibre optical camera and lighting equipment known from other applications where space is cramped. By performing this monitoring and/or inspection, a high quality may be ensured while at the same time images may be stored which can be used as documentation for work made in the agreed quality.

By this method, there may be formed a mechanical fastening of one or more elements inside a wing blade for a wind power plant, e.g. a central pipe or other object that require fastening in the interior of a wing.

Another way of applying the method is that two or more barriers are formed in an elongated channel in a wing blade for a wind power plant, where between these barriers is formed a chamber, preferably for placing balancing material. It is thus possible to perform further or supplementing balancing of the individual wing blades in relation to each other. This may e.g. be necessary if equipment has been installed in a wing or repairs have been made that increase the weight of the wing in question. In connection with balancing, the method may also be applied to the balancing occurring before the wing blade leaves the factory. In this situation, it is not a classical retrofit task as the wing has not yet been in operation. Irrespectively whether balancing is effected before commissioning in order to pair a wing with two others for providing a balanced rotor set, or whether speaking of balancing required due to damage or the like, the method according to the invention may be applied.

Another variant of a method according to the invention is that the method is used for forming a reinforcement in an area of a wing blade for a wind power plant. This may be an advantage if it appears that a certain type of wing blades have problems with bulges or similar in a certain area. The invention may then typically be used for delimiting a certain area of the interior of the wing and subsequently fill this area with either expanding polyurethane foam or another material which may prevent the bulging by reinforcing the actual area on the wing blade.

By a method according to the invention, all the mentioned retrofit tasks may be performed with the wing blade mounted on a wind power plant where the wing blade is preferably arranged in its lowest vertical position along the tower of the wind power plant. Thus there is no need for dismounting the wing and no need either for transporting the wing blade to a suitable room. The task is solved by one or more persons on the site, either from a suspended gondola, from a personnel carrier on a lift or hanging at the side of the wing in climbing ropes.

A balloon for use in connection with a method according to the invention may be provided with a valve, preferably a valve preventing e.g. air from flowing out of the balloon, where the valve e.g. is of the type known from bicycles and cars. By using such a valve, commonly available equipment may be used for pumping air into the balloon as well as for regulating and supervising how great pressure is present in the balloon. Inflation may e.g. be effected by a hand pump or a battery-driven handheld pump. After performing the required task, the air may easily be let out of the balloon, and it may possibly be drawn out of the mounting hole or pushed back through the mounting hole completely into the wing blade, after which mounting holes and inspection holes are sealed in a suitable way.

In a preferred variant of a balloon according to the invention, this is provided with a balloon neck which substantially has a length corresponding to the material thickness of the wing shell or longer. In that way, it is easier to mount and to ensure that the balloon is in the proper place. By mounting a clip or similar on the balloon neck at the valve it may be ensured that the balloon remains in proper position until it is filled with a suitable amount of air.

### Description of the Drawing

The invention is described in the following with reference to the drawing, wherein:
Fig. 1 shows a wind power plant with a wing along the tower.
Fig. 2 shows a typical cross-section of a wing for a wind power plant.
Fig. 3 shows a detail of a wing blade where the interior of the wing is visible.

### Detailed Description of the Invention

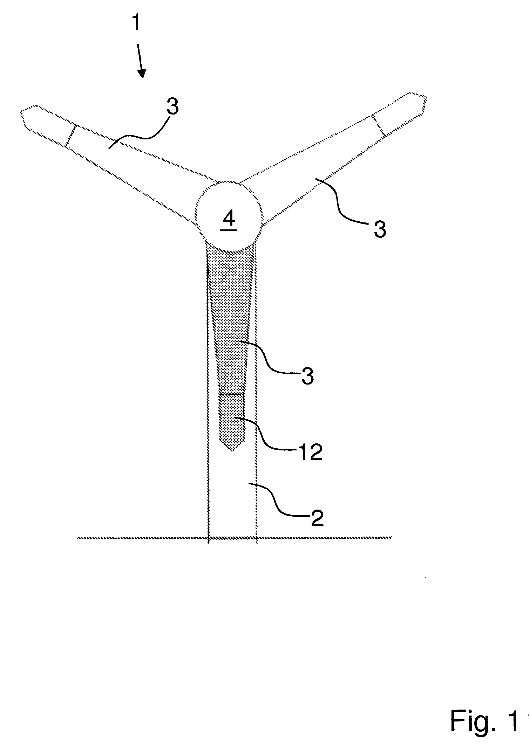

In Fig. 1 appears a wind power plant 1 consisting of a tower 2 and a rotor with three wing blades 3. At centre of the rotor appears a hub 4, and behind the hub 4 is a not visible nacelle in which gearbox and generator etc. may be arranged.

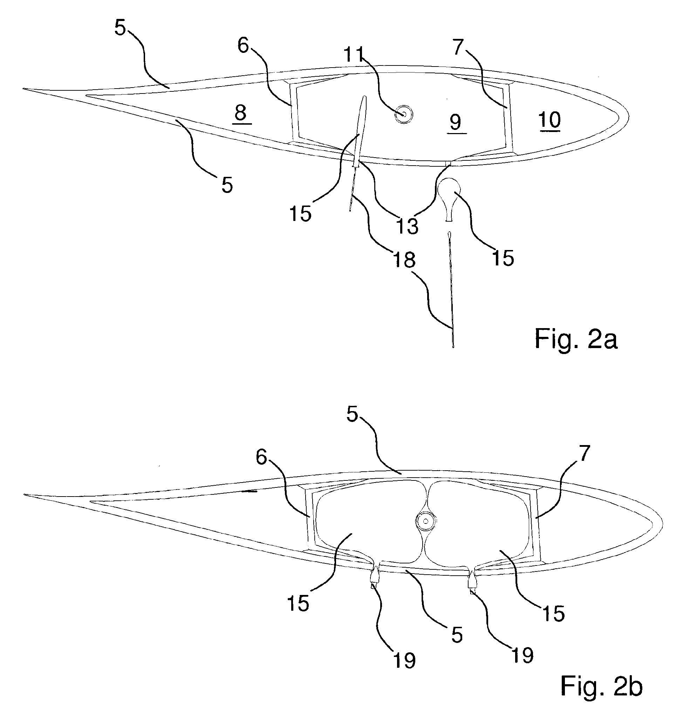

In Fig. 2 appears a cross-section of a typical wing blade 3. The cross-section is from the outermost part of the wing 3 where the aerodynamic shape is hardly distinguishable from a wing of an airplane. The wing is built up with an outer shell 5 forming the aerodynamic shape and with internal reinforcing and longitudinal beams 6 and 7. Between the beam 6 and the shell 5 is formed a first compartment 8, between the beam 6 and 7 and the shell 5 is formed a second compartment 9, whereas between the beam 7 and the shell 5 is formed a third compartment 10. All these three compartments 8, 9 and 10 are longitudinal and typically extend along most of the length of the wing. At the centre of the compartment 9 is seen a pipe 11 in which various structural elements may be mounted. For example, it may be a steel wire forming part of the control and regulation of a rotary wing tip 12. In Fig. 2a appears inspection and mounting holes 13 through which balloons 15 are provided in the second compartment 9. The balloons are placed while using a suitable tool 18. In Fig. 2b the said balloons 15 are seen after having been inflated with atmospheric air. As it appears from the Figure, the inflated balloons 15 practically fill up the entire space between the wing shell 5 and the longitudinal beams 6 and 7. In this way, the central pipe 11 is fixed in correct position, and applying a suitable layer of expanding foam may be effected. Furthermore, the valves 19 are seen on the balloons 15. The valves 19 are here shown with a size preventing them from being drawn into the interior of the wing as the holes 13 are with lesser cross-sectional dimension than the cross-section of the valves.

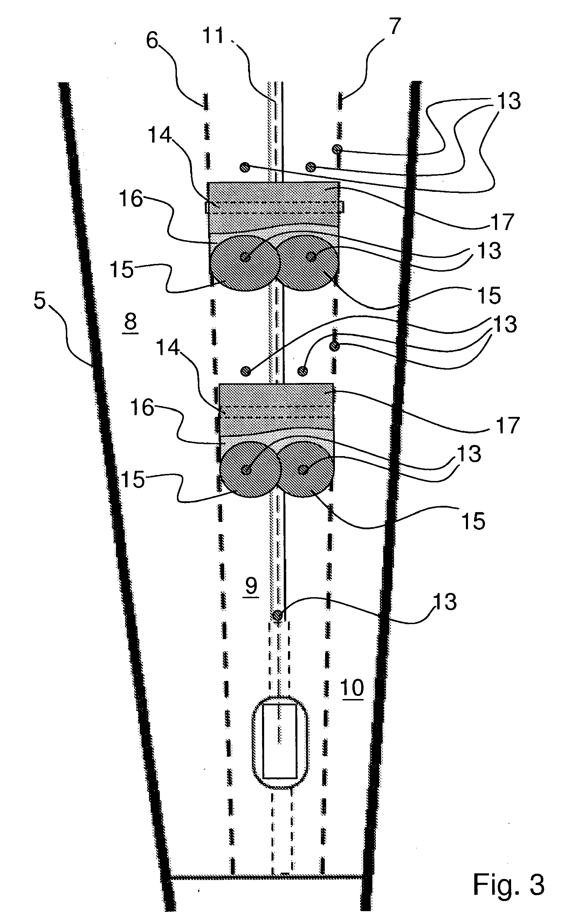

In Fig. 3 is seen a detail of a wing 3, looking into the interior of the wing blade. The shell 5 marked by thick longitudinal lines. Internally, the beams 6 and 7 and the longitudinal compartments 8, 9 and 10 are seen. Moreover, the longitudinal central pipe 11 is seen. Inspection and mounting holes 13 are drilled through the shell 5. These holes 13 may, as mentioned, be used for internal inspection of the wing and for mounting various elements forming part of the required retrofit task. In the shown example, the task is to support the central pipe 11 which under normal circumstances is fixed to the interior of the compartment 9 with brackets 14 provided with suitable spacing.

These brackets may have a tendency to break after a long time of operation, and it is particularly the brackets located further in the wing 3 that have this unfavourable tendency. If the damage is not repaired, additional damage may arise during operation of the power plant 1, with consequences to the safety.

In Fig. 3 are seen balloons 15 arranged in the compartment 9 at respective sides of the pipe 11. The balloons are mounted through the mounting holes 13 and are inflated with atmospheric air via the balloon necks that extend out of the mounting holes 13. By regulating the air pressure in the two balloons 15, the central pipe 11 may readily be brought into correct position. The balloons 15 are to some degree formed according to the beams 6 and 7 and the shell 5, but in order to ensure perfect tightness, expanding polyurethane foam 16 is sprayed in over the balloons 15, providing a stable and supporting plug or wall in the compartment 9 immediately over the balloons. The expanding foam 16 may be quick-setting such that in principle, the balloons 15 are no longer required after hardening. Above the foam 16 is subsequently injected a different material 17 which e.g. may be a polyurethane rubber mass which encloses the defunct bracket 14 and provides the necessary mechanical and structural strength for holding the pipe 11 in position. By enclosing the defective bracket 14 with this material 17, there is furthermore achieved a mechanical locking between the bracket 14 and the structural elements 5, 6, 7 in the wing 3.

The number of inspection and mounting holes 13 may be determined according to need, and it is easy to envisage that a task like the one indicated on Fig. 3 may be performed with one mounting hole 13 for each balloon 15 and with just one or to additional inspection holes 13. It is thus a solution with minimal interference with the structure of the wing blade.

## Claims

1. A method for performing a task in a tight place in an elongated profile, preferably in a wing blade (3) with an outer shell (5) for a wind power plant (1), where the task is preferably a retrofit task whereby there is formed at least one barrier (16, 17) transversely of at least one elongated channel (8, 9, 10) in the profile (3), wherein the method includes the following steps:
- establishing a number of inspection and mounting holes (13) in the shell (5), preferably small, drilled holes with a diameter between 8 and 25 millimetres and preferably with a diameter between 10 and 12 millimetres;
- providing one or more inflatable balloons (15) in the channel (8, 9, 10) in question, where a balloon (15) is passed through one of the established holes (13);
- inflating the balloon or balloons (15), preferably with atmospheric air;
- applying at least one first material layer (16) which extends between the sidewalls (5, 6, 7) of the elongated channel (8, 9, 10) and across the balloon or balloons (15), where a monitored amount of expanded polyurethane foam constitutes said first material layer (16), **characterised in that** the method further includes a step wherein an additional material layer (17) is laid upon the first material layer (16), where the additional material layer (17) has a specific density and/or strength which is greater than that of the material layer (16) laid at first.

2. Method according to claim 1, **characterised in that** the balloon or balloons (15) are mounted through a mounting hole (13), where the balloon (15) is preferably mounted by means of a slender tool (18) whereby the balloon (15) is extended and passed through the mounting hole (13).

3. Method according to any of claims 1-2, **characterised in that** the process of providing one or more balloons (15) as well as the process of applying one or more material layers (16, 17) occurs under monitoring with suitable equipment, where the monitoring is effected through mounting and/or inspection holes (13).

4. Method according to any of claims 1-3, **characterised in that** by the method there is formed a mechanical fastening of one or more elements (11, 14) inside a wing blade (3) for a wind power plant (1).

5. Method according to any of claims 1-3, **characterised in that** two or more barriers are formed in an elongated channel (8, 9, 10) in a wing blade (3) for a wind power plant (1), where between these barriers (16, 17) is formed a chamber, preferably for placing balancing material.

6. Method according to any of claims 1-3, **characterised in that** by the method there is formed a reinforcement in an area of a wing blade (3) for a wind power plant (1).

7. Method according to any of claims 1-6, **characterised in that** the retrofit task is provided with the wing blade (3) mounted on a wind power plant (1) where the wing blade (3) is preferably arranged in a position along the tower (2) of the wind power plant (1).

8. Method according to any of the preceding claims, **characterised by** using an inflatable balloon (15) with a valve (16) of the type known from bicycles and cars preventing air from flowing out of said balloon (15).

9. Method according to any of the preceding claims, **characterised by** using an influtable balloon (15) having a length of the neck of the balloon (15) exceeding the thickness of a wing blade shell (5) when passed into said shell (5) through one of the mounting holes (13).

## Patentansprüche

1. Verfahren zum Ausführen einer Arbeit an einem beengten Ort in einem länglichen Profil, vorzugsweise in einem Flügelblatt (3) mit einer Außenhülle (5) für eine Windkraftanlage (1), wobei es sich bei der Arbeit bevorzugt um eine Nachrüstarbeit handelt, wodurch mindestens eine Absperrung (16, 17) quer zu mindestens einem länglichen Kanal (8, 9, 10) in dem Profil (3) gebildet wird, wobei das Verfahren folgende Schritte umfasst:
- Erzeugen einer Zahl von Inspektions- und Montagelöchern (13) in der Hülle (5), bevorzugt kleine gebohrte Löcher mit einem Durchmesser zwischen 8 und 25 Millimetern und bevorzugt mit einem Durchmesser zwischen 10 und 12 Millimetern;
- Bereitstellen von einem oder mehreren aufblasbaren Ballons (15) in dem betreffenden Kanal (8, 9, 10), wobei ein Ballon (15) durch eines der erzeugten Löcher (13) geführt wird;
- Aufblasen des Ballons bzw. der Ballone (15), bevorzugt mit atmosphärischer Luft;
- Aufbringen von mindestens einer ersten Materialschicht (16), die sich zwischen den Seitenwänden (5, 6, 7) des länglichen Kanals (8, 9, 10) und über den Ballon bzw. die Ballone (15) erstreckt, wobei eine überwachte Menge expandierten Polyurethanschaums die genannte erste Materialschicht (16) bildet, **dadurch gekennzeichnet, dass** das Verfahren weiter einen Schritt umfasst, in dem eine zusätzliche Materialschicht (17) auf die erste Materialschicht (16) gelegt wird, wobei die zusätzliche Materialschicht (17) eine spezifische Dichte und/oder Festigkeit aufweist, die größer ist als diejenige der zuerst abgelegten Materialschicht (16).

2. Verfahren nach Anspruch 1, **dadurch gekennzeichnet, dass** der Ballon bzw. die Ballone (15) durch ein Montageloch (13) montiert werden, wobei der Ballon (15) bevorzugt mittels eines schlanken Werkzeugs (18) montiert wird, wobei der Ballon (15) gestreckt und durch das Montageloch (13) geführt wird.

3. Verfahren nach einem der Ansprüche 1-2, **dadurch gekennzeichnet, dass** der Prozess des Bereitstellens von einem oder mehreren Ballonen (15) sowie der Prozess des Aufbringens von einer oder mehreren Materialschichten (16, 17) unter Überwachung mit geeigneter Ausrüstung stattfindet, wobei die Überwachung durch Montage- und/oder Inspektionslöcher (13) erfolgt.

4. Verfahren nach einem der Ansprüche 1-3, **dadurch gekennzeichnet, dass** mit dem Verfahren eine mechanische Befestigung von einem oder mehreren Elementen (11, 14) in einem Flügelblatt (3) für eine Windkraftanlage (1) gebildet wird.

5. Verfahren nach einem der Ansprüche 1-3, **dadurch gekennzeichnet, dass** zwei oder mehr Absperrungen in einem länglichen Kanal (8, 9, 10) in einem Flügelblatt (3) für eine Windkraftanlage (1) gebildet wird, wobei zwischen diesen Absperrungen (16, 17) eine Kammer gebildet wird, bevorzugt zum Platzieren von Auswuchtmaterial.

6. Verfahren nach einem der Ansprüche 1-3, **dadurch gekennzeichnet, dass** mit dem Verfahren eine Verstärkung in einem Bereich eines Flügelblatts (3) für eine Windkraftanlage (1) gebildet wird.

7. Verfahren nach einem der Ansprüche 1-6, **dadurch gekennzeichnet, dass** die Nachrüstarbeit erbracht wird, während das Flügelblatt (3) an einer Windkraftanlage (1) montiert ist, wobei das Flügelblatt (3) bevorzugt in einer Position entlang dem Mast (2) der Windkraftanlage (1) angeordnet ist.

8. Verfahren nach einem der vorangehenden Ansprüche, **gekennzeichnet durch** Verwenden eines aufblasbaren Ballons (15) mit einem Ventil (16) der von Fahrrädern und Kraftfahrzeugen bekannten Art, das verhindert, das Luft aus dem genannten Ballon (15) strömt.

9. Verfahren nach einem der vorangehenden Ansprüche, **gekennzeichnet durch** Verwenden eines aufblasbaren Ballons (15) mit einer Länge des Halses des Ballons (15), die die Dicke einer Flügelblatthülle (5) übersteigt, wenn er **durch** eines der Montagelöcher (13) in die genannte Hülle (5) geführt wird.

## Revendications

1. Procédé permettant d'exécuter une tâche dans un endroit étanche dans un profilé allongé, de préférence dans une pale en forme d'aile (3) ayant une coque externe (5) pour une installation éolienne (1), la tâche étant de préférence une tâche de rattrapage ce par quoi au moins une barrière (16, 17) est formée dans le sens transversal par rapport à au moins un canal allongé (8, 9, 10) dans le profilé (3), dans lequel le procédé comprend les étapes suivantes consistant à :
- établir un certain nombre de trous d'inspection et de montage (13) dans la coque (5), de préférence des trous percés de petite taille ayant un diamètre mesurant entre 8 et 25 millimètres et de préférence un diamètre mesurant entre 10 et 12 millimètres ;
- mettre en oeuvre un ou plusieurs ballonnets gonflables (15) dans le canal (8, 9, 10) en question, un ballonnet (15) traversant l'un des trous établis (13) ;
- gonfler le ballonnet ou les ballonnets (15), de préférence avec de l'air atmosphérique ;
- appliquer au moins une première couche de matériau (16) qui s'étend entre les parois latérales (5, 6, 7) du canal allongé (8, 9, 10) et en travers du ballonnet ou des ballonnets (15), où une quantité surveillée de mousse de polyuréthanne expansé constitue ladite première couche de matériau (16), **caractérisé en ce que** le procédé comprend par ailleurs une étape dans laquelle une couche de matériau supplémentaire (17) est posée sur la première couche de matériau (16), la couche de matériau supplémentaire (17) ayant une densité relative et/ou une résistance qui est supérieure à celle de la couche de matériau (16) posée en premier.

2. Procédé selon la revendication 1, **caractérisé en ce que** le ballonnet ou les ballonnets (15) sont montés au travers d'un trou de montage (13), le ballonnet (15) étant de préférence monté au moyen d'un outil effilé (18) ce par quoi le ballonnet (15) est étendu et passé au travers du trou de montage (13).

3. Procédé selon l'une quelconque des revendications 1 à 2, **caractérisé en ce que** le processus consistant à mettre en oeuvre un ou plusieurs ballonnets (15) ainsi que le processus consistant à appliquer une ou plusieurs couches de matériau (16, 17) se produisent sous la surveillance d'un équipement approprié, la surveillance étant effectuée au travers de trous de montage et/ou d'inspection (13).

4. Procédé selon l'une quelconque des revendications 1 à 3, **caractérisé en ce que** le procédé permet de former une fixation mécanique d'un ou de plusieurs éléments (11, 14) à l'intérieur d'une pale en forme d'aile (3) pour une installation éolienne (1).

5. Procédé selon l'une quelconque des revendications 1 à 3, **caractérisé en ce que** deux ou plusieurs barrières sont formées dans un canal allongé (8, 9, 10) dans une pale en forme d'aile (3) pour une installation éolienne (1), une chambre étant formée entre ces barrières (16, 17), de préférence pour placer un matériau d'équilibrage.

6. Procédé selon l'une quelconque des revendications 1 à 3, **caractérisé en ce que** le procédé permet de former un renfort dans une zone d'une pale en forme d'aile (3) pour une installation éolienne (1).

7. Procédé selon l'une quelconque des revendications 1 à 6, **caractérisé en ce que** la tâche de rattrapage est mise en oeuvre avec la pale en forme d'aile (3) montée sur une installation éolienne (1), la pale en forme d'aile (3) étant de préférence arrangée en une position le long de la tour (2) de l'installation éolienne (1).

8. Procédé selon l'une quelconque des revendications précédentes, **caractérisé par** l'utilisation d'un ballonnet gonflable (15) avec une valve (16) du type connu sur les vélos et voitures pour empêcher l'air de sortir dudit ballonnet (15).

9. Procédé selon l'une quelconque des revendications précédentes, **caractérisé par** l'utilisation d'un ballonnet gonflable (15) ayant une longueur du col du ballonnet (15) supérieure à l'épaisseur d'une coque (5) de pale en forme d'aile quand il est passé dans ladite coque (5) au travers de l'un des trous de montage (13).
